# EUROPÄISCHE PATENTSCHRIFT

(11) **EP 2 359 100 B1**
(45) Veröffentlichungstag und Bekanntmachung des Hinweises auf die Patenterteilung: **30.01.2019**
(21) Anmeldenummer: 09799310.9
(22) Anmeldetag: 11.12.2009
(51) Int. Cl.: G01F 1/58, G01F 1/66

(54) **DURCHFLUSS-MESSGERÄT UND VERFAHREN ZUR HERSTELLUNG EINES MESSROHRS EINES DURCHFLUSS-MESSGERÄTES**
FLOW METER AND METHOD FOR PRODUCING A MEASUREMENT PIPE OF A FLOW METER
DÉBITMÈTRE ET PROCÉDÉ DE FABRICATION D'UN TUBE DE MESURE D'UN DÉBITMÈTRE

(30) Priorität: 19.12.2008 DE 102008054961
(43) Veröffentlichungstag der Anmeldung: 24.08.2011
(73) Patentinhaber: Endress+Hauser Flowtec AG, 4153 Reinach (CH)
(72) Erfinder: VOIGT, Frank, 79576 Weil am Rhein (DE); WOHLGEMUTH, Werner, CH-4206 Seewen (CH); SULZER, Thomas, 79639 Grenzach-Wyhlen (DE); STÜNZI, Alexander, CH-4153 Reinach (CH)
(74) Vertreter: Andres, Angelika Maria
(86) Internationale Anmeldenummer: PCT/EP2009/066909
(87) Internationale Veröffentlichungsnummer: WO 2010/069867

(56) Entgegenhaltungen:
- EP-A2- 1 519 160
- DE-A1-102006 018 415
- DE-U1-202007 018 760
- JP-A- 9 079 879
- JP-A- 10 197 301

## Beschreibung

Die Erfindung bezieht sich auf ein Verfahren zur Herstellung eines Messrohrs eines Durchfluss-Messgerätes, wobei das Messrohr ein Lumen zur Aufnahme eines strömenden Messstoffs aufweist.

Weiterhin bezieht sich die Erfindung auf ein Durchfluss-Messgerät mit einem ein Trägerrohr umfassenden Messrohr, wobei das Messrohr mit einem elektrisch isolierenden Material ausgekleidet ist.

Zur Bestimmung der Durchflussmenge werden in Anlagen der Prozess- und/oder Automatisierungstechnik Messverfahren wie die magnetischinduktive Durchflussmessung oder die Ultraschall-Durchflussmessung eingesetzt. Aufgrund des Messverfahrens und/oder aufgrund hygienischer Erfordernisse ist eine elektrische und/oder chemische Isolierung des Messstoffs gegenüber seiner Umwelt notwendig. Auf derartigen Messprinzipien beruhende Durchfluss-Messgeräte sind an Rohrleitungen angeschlossen und weisen ein Messrohr auf. Rohrleitungen oder Messrohre bestehen aus einem meist metallischen Trägerrohr, einer isolierenden Auskleidung sowie einer in die isolierende Auskleidung eingebrachten Verstärkung in Form eines Stützkörpers. Üblicherweise wird der Stützkörper in das Trägerrohr eingebracht und steht mit diesem in Kontakt.

Es sind Messrohre, insbesondere aus der magnetisch-induktiven Durchflussmessung bekannt, die mit einer Auskleidung, dem sog. Liner, auf der Innenseite versehen sind, um die Elektroden gegenüber dem Trägerrohr elektrisch und/oder chemisch zu isolieren. Ein aufgeklebter oder aufvulkanisierter oder eingepresster Liner hat den Nachteil, dass die Haftung zwischen Trägerrohr und Liner bei Temperatur- oder Druckschwankungen nicht hinreichend gegeben ist. Dies kann zu einer Ablösung beispielsweise aufgrund unterschiedlicher Temperaturausdehnungskoeffizienten zwischen Trägerrohr und Liner oder durch auftretenden Unterdruck führen. Aufgesprühte oder thermisch aufgeschmolzene Liner haben meist geringere Isolationseigenschaften, wodurch die Messgenauigkeit und die Lebensdauer der Messrohre abnehmen.

Aus dem Stand der Technik sind Befestigungskonstruktionen bekannt geworden, bei denen der Liner an der Innenseite des Trägerrohrs mit Schwalbenschwanz- oder Brückenkonstruktionen befestigt ist. Eine derartige punktuelle Befestigung kann eine Ablösung des Liners nicht dauerhaft verhindern. Des Weiteren sind Stützkörper bekannt geworden, die in das Trägerrohr eingebracht sind, um den Liner zu verstärken. Zu den beschriebenen Stützkörpern gehört ein Rohr mit einem kleineren Außendurchmesser als der Innendurchmesser des Trägerrohrs und einer bestimmten Anzahl an Löchern, welches in das Trägerrohr eingebracht ist und vom Isoliermaterial vollständig umschlossen wird. Die Anzahl der Löcher ist sorgfältig zu wählen, da bei großem Lochabstand die Gefahr einer Ablösung der Isolierung von dem der Verstärkung dienenden Rohr besteht. Die Menge des isolierenden Materials, welches das zur Verstärkung dienende Rohr vollständig umkleiden muss, ist relativ hoch.

Ein weiterer aus dem Stand der Technik (z.B. DE10 2006 018 415, EP1 519 160) bekannter Stützkörper besteht aus einem gitter- oder netzartigen insbesondere dreidimensionalen Gewebe, welches aus verschiedenen Werkstoffen hergestellt sein kann, bspw. aus Metall, welches in das Trägerrohr eingebracht und mit diesem punktuell stoffschlüssig verbunden wird und welches vom elektrisch und/oder chemisch isolierenden Material umschlossen wird. Um eine ausreichende Stabilität des Liners zu gewährleisten, sind viele Befestigungspunkte notwendig. Eine Verstärkung mit einem solchen Stützkörper ist bei konischem Verlauf des Innendurchmessers des Messrohrs sehr aufwendig zu realisieren.

Die EP 0581017 B1 beschreibt ein Messrohr mit einem porösen Stützkörper, welcher mit dem Trägerrohr in Kontakt steht und bei welchem das Material der isolierenden Auskleidung nicht bis an die Innenseite des Trägerrohrs gelangt. Dadurch sind Poren auf der dem Trägerrohr zugewandten Seite des Stützkörpers ungefüllt.

Alle genannten Konstruktionen haben den Nachteil, dass sie relativ aufwendig in der Herstellung und damit relativ teuer sind.

Die Aufgabe der Erfindung besteht daher darin, ein für industrielle Anwendungen kostengünstig herstellbares Durchfluss-Messgerät vorzuschlagen und ein Verfahren zur Herstellung eines Messrohrs mit einer elektrisch und/oder chemisch isolierenden Auskleidung anzugeben, welches wenige Verfahrensschritte umfasst und somit kostengünstig herzustellen ist.

Die Aufgabe wird erfindungsgemäß von einem Durchfluss-Messgerät und einem Verfahren zur Herstellung eines Messrohrs eines Durchfluss-Messgerätes gelöst.

Hinsichtlich des Verfahrens wird die Aufgabe dadurch gelöst, dass das Verfahren die folgenden Schritte umfasst: Einbringen mindestens eines im Wesentlichen zylindrischen Hohlkörpers in ein Trägerrohr, Fügen des im Wesentlichen zylindrischen Hohlkörpers an das Trägerrohr durch mechanisches Umformen wenigstens eines Teilbereichs des im Wesentlichen zylindrischen Hohlkörpers, Einbetten des an das Trägerrohr angefügten Hohlkörpers in ein elektrisch und/oder chemisch isolierendes Material, wobei durch das elektrisch und/oder chemisch isolierende Material das Lumen des Messrohrs gebildet wird. Durch das mechanische Umformen kann der Hohlkörper, insbesondere radial, aufgeweitet und gestreckt und dadurch an das Trägerrohr angepasst werden. Außerdem kann durch das mechanische Umformen der Durchmesser des im Wesentlichen zylindrischen Hohlkörpers wenigstens in dem Teilbereich, in welchem der im Wesentlichen zylindrische Hohlkörper umgeformt wird, vergrößert werden. Es entsteht eine nur schwer lösbare zylindrische Pressverbindung zwischen Hohlkörper und Trägerrohr, durch deren Haftreibung der Hohlkörper am Trägerrohr fixiert wird. Der im Wesentlichen zylindrische Hohlkörper kann hierfür eine an die Form des Trägerrohrs angepasste Form aufweisen. Dafür kann ein im Wesentlichen zylindrischer Hohlkörper, dessen äußerer Durchmesser kleiner als der innere Durchmesser des Trägerrohres ist verwendet und in das Trägerrohr eingebracht werden. Der durch das mechanische Umformen an das Trägerrohr angefügte Hohlkörper kann als Stützkörper für die aus einem elektrisch und/oder chemisch isolierenden Material bestehende Auskleidung dienen. Dafür kann der an das Trägerohr angefügte Hohlkörper in das elektrisch und/oder chemisch isolierende Material eingebettet werden und als Verankerung bzw. Befestigung für das elektrisch und/oder chemisch isolierende Material dienen. Das Lumen des Messrohrs ist bspw vollständig von dem elektrisch und/oder chemisch isolierenden Material umgeben bzw. gebildet. Von Vorteil dabei ist die aufgrund von eingesparten Material- und Fertigungskosten gegenüber bspw. den Sinterverfahren günstigere Herstellung des Messrohrs und der ein Messrohr umfassenden Durchfluss-Messgeräte. Weiterhin vereinfacht das vorgeschlagene Verfahren die Herstellung eines Durchfluss-Messgerätes, denn aufgrund der lediglich mechanischen Umformung wird eine schnellere und präzisere Fertigung von Messrohren erreicht.

In einer Ausgestaltung wird der im Wesentlichen zylindrische Hohlkörper durch ein Walzverfahren umgeformt. Durch das Walzen kann der in das Trägerrohr eingebrachte, im Wesentlichen zylindrische Hohlkörper gezielt umgeformt bzw. geweitet, d.h. sein Durchmesser vergrößert, werden. Dabei kann der im Wesentlichen zylindrische Hohlkörper durch rotierende Werkzeuge, den sog. Walzen, umgeformt werden. Das Walzverfahren kann zudem vorteilhafterweise automatisiert durchgeführt werden. Durch das Walzen kann der im Wesentlichen zylindrische Hohlkörper gestreckt bzw. geweitet werden. Alternativ kann der im Wesentlichen zylindrische Hohlkörper durch einen Dorn oder ein sonstiges Spreizwerkzeug geweitet und an das Trägerrohr gefügt werden.

In einer weiteren Ausgestaltung weist das Trägerrohr eine Innenfläche auf, wobei der im Wesentlichen zylindrische Hohlkörper durch mechanisches Umformen wenigstens eines Teilbereichs des im Wesentlichen zylindrischen Hohlkörpers an die Innenfläche des Trägerrohrs angefügt wird. Bspw. mittels des Walzverfahrens kann so eine Pressverbindung zwischen dem im Wesentlichen zylindrischen Hohlkörper und dem Trägerrohr an der Innenfläche des Trägerrohrs hergestellt werden, indem der im Wesentlichen zylindrische Hohlkörper an die Wandung des Trägerrohrs gewalzt wird. Dadurch kann der im Wesentlichen zylindrische Hohlkörper radial in vollem Umfang und entlang eines Teilbereichs der Längsachse des Messrohrs an das Trägerohr gefügt werden. Es ist aber bspw. ausreichend den im Wesentlichen zylindrischen Hohlkörper lediglich in einem Teilbereich entlang der Längsachse des Messrohrs mechanisch umzuformen bzw. zu walzen, um eine Pressverbindung zu erhalten, welche zum Fixieren des im Wesentlichen zylindrischen Hohlkörpers am Trägerrohr genügt.

In einer Fortbildung wird mindestens ein Lochblechrohr als im Wesentlichen zylindrischer Hohlkörper verwendet. Ein Lochblech ist ein in ein Blech gestanztes Metallgitter. Das Lochblech kann zu einem Lochblechrohr umgeformt werden. Das Lochblechrohr kann verschiedene Lochungen, d.h. Lochformen und Anordnungen der Löcher zueinander wie bspw. runde oder quadratische Löcher aufweisen, die in Reihen zueinander gerade oder versetzt angeordnet sind. Die Löcher dienen als Verankerung für das elektrisch und/oder chemisch isolierende Material aus welchem die Auskleidung besteht. Das elektrisch und/oder chemisch isolierende Material dringt in die Löcher ein und wird so an dem angefügten Hohlkörper bzw. an dem Trägerrohr befestigt. Das elektrisch und/oder chemisch isolierende Material wird nach dem Fügen des im Wesentlichen zylindrischen Hohlkörpers an das Trägerrohr aufgebracht und der an das Trägerrohr angefügte Hohlkörper darin eingebettet. Der an das Trägerrohr angefügte Hohlkörper ist vorzugsweise vollständig von dem elektrisch und/oder chemisch isolierenden Material umgeben.

In einer weiteren Fortbildung beträgt die Differenz zwischen dem inneren Durchmesser des Trägerrohrs und dem äußeren Durchmesser des im Wesentlichen zylindrischen Hohlkörpers weniger als 1 mm. Sowohl das Trägerohr als auch der im Wesentlichen zylindrische Hohlkörper können, aufgrund ihrer vorhandenen Dicken, mindestens einen inneren und einen äußeren Durchmesser aufweisen. Durch das mechanische Umformen kann der äußere Durchmesser des im Wesentlichen zylindrischen Hohlkörpers an den inneren Durchmesser des Trägerrohrs angeglichen werden. Dabei wird der im Wesentlichen zylindrische Hohlkörper vor allem radial gestreckt bzw. geweitet. Aufgrund der Materialeigenschaften, insbesondere eines metallischen Blechs, und der für die Fertigung notwendigen Werkzeuge und bei der Fertigung wirkenden Kräfte, hat es sich als vorteilhaft erwiesen, die Größe des äußeren Durchmessers des im Wesentlichen zylindrischen Hohlkörpers höchstens 1 mm kleiner als den inneren Durchmesser des Trägerrohrs zu wählen.

Wird der im Wesentlichen zylindrische Hohlkörper lediglich in einem Teilbereich entlang der Längsachse des Messrohrs an das Trägerrohr angefügt, so entsteht in dem restlichen Bereich in dem der im Wesentlichen zylindrische Hohlkörper in das Trägerrohr eingebracht ist ein Spalt zwischen dem im Wesentlichen zylindrischen Hohlkörper und der Wandung des Trägerrohrs. Dieser Spalt kann auch als Verankerung für das elektrisch und/oder chemisch isolierende Material dienen. Das elektrisch und/oder chemisch isolierende Material kann durch die Löcher der Lochung hindurch in den Spalt fließen und in dem Spalt zwischen dem Lochblechrohr und dem Trägerrohr wieder zusammenfließen. Dies ist besonders vorteilhaft, da das elektrisch und/oder chemisch isolierende Material oftmals ein Kunststoff ist der bspw. in eine Form gegossen wird und beim Erkalten zum Schrumpfen neigt. Dadurch, dass das elektrisch und/oder chemisch isolierende Material in den Spalt einfließt, bleibt die Auskleidung auch nach dem Erkalten des Materials ausreichend am Trägerrohr befestigt.

Hinsichtlich des Durchfluss-Messgerätes wird die Aufgabe dadurch gelöst, dass mindestens ein im Wesentlichen zylindrischer Hohlkörper durch mechanisches Umformen an das Trägerrohr gefügt ist und dass der im Wesentlichen zylindrische Hohlkörper in das elektrisch und/oder chemisch isolierende Material eingebettet ist. Ein derartiges Messrohr ist in seiner Herstellung wesentlich günstiger, weist kleinere Fertigungstolleranzen und dennoch eine hohe Stabilität der Auskleidung auf.

In einer Ausführungsform des Durchfluss-Messgerätes besteht der im Wesentlichen zylindrische Hohlkörper aus einem zu einem Rohr geformten Blech. Ein aus einem, insbesondere metallischen, Blech bestehendes Rohr ist leicht zu bearbeiten, insbesondere umzuformen und kostengünstig.

In einer weiteren Ausführungsform des Durchfluss-Messgerätes weist der im Wesentlichen zylindrische Hohlkörper mindestens eine Lochung auf. Die Lochung dient zur Befestigung des elektrisch und/oder chemisch isolierenden Materials aus dem die Auskleidung besteht. Das elektrisch und/oder chemisch isolierende Material wird bspw. in die Löcher eingespritzt oder eingegossen und erfährt dadurch einen Halt, der die Auskleidung am Ablösen von dem Trägerrohr oder Stützkörper hindert.

In einer Ausgestaltung des Durchfluss-Messgerätes ist der an das Trägerrohr angefügte im Wesentlichen zylindrische Hohlkörper wenigstens in einem Endbereich des Messrohrs, welcher zum Anschließen des Messrohrs an eine Rohrleitung dient, frei von der Lochung. Dadurch kann die Auskleidung an den beiden Stirnseiten des Messrohrs eine im Wesentlichen konstante Schichtdicke aufweisen, so dass ein gegenüber dem Messstoff oder dem Prozessdruck dichter Anschluss an eine Rohrleitung hergestellt werden kann.

In einer weiteren Ausgestaltung des Durchfluss-Messgerätes ist der im Wesentlichen zylindrische Hohlkörper entlang wenigstens eines radial verlaufenden Bereichs an das Trägerrohr gefügt. Aufgrund der durch das Umformen auftretenden hohen Haftreibung, muss der Hohlkörper nicht entlang seiner gesamten Längsachse an das Trägerrohr gefügt sein, vielmehr genügt es mindestens einen radialen verlaufenden Bereich an das Trägerrohr anzuformen und so eine Pressverbindung herzustellen. Vorzugsweise wird der im Wesentlichen zylindrische Hohlkörper wenigstens in dem Bereich in dem er eine Lochung aufweist umgeformt und an das Trägerrohr angefügt.

In einer Variante des Durchfluss-Messgerätes besteht der im Wesentlichen zylindrische Hohlkörper aus einem ersten Lochblechrohr mit einer ersten Lochung und aus einem zweiten Lochblechrohr mit einer zweiten Lochung, wobei das erste Lochblechrohr das zweite Lochblechrohr umfasst. Das zweite Lochblechrohr kann in das erste Lochblechrohr eingebracht und von diesem umgeben sein. Dabei kann der Lochdurchmesser der zweiten Lochung so gewählt sein, dass wenn die beiden Lochblechrohre ineinander geschoben sind, ein Loch mit dem ersten Lochdurchmesser mindestens zwei Löcher der zweiten Lochung wenigstens teilweise umfasst. Dafür kann der Lochdurchmesser der ersten Lochung wenigstens so groß wie die Teilung der zweiten Lochung gewählt werden. Die Teilung entspricht dem Abstand der Mitten zweier benachbarter Löcher. Dadurch kann ein elektrisch und/oder chemisch isolierendes Material welches die Auskleidung bildet in die Löcher der zweiten Lochung einfließen und innerhalb eines Lochs der ersten Lochung zwei Löcher der zweiten Lochung wieder zusammenfließen. Dadurch verankert sich das elektrisch und/oder chemisch isolierende Material in dem als Stützkörper fungierenden Hohlkörper. Der Stützkörper für die Auskleidung kann also aus lediglich einem Lochblechrohr oder aber aus zwei oder mehr Lochblechrohren die ineinander geschoben werden bestehen.

In einer weiteren Variante des Durchfluss-Messgerätes weist die erste Lochung Löcher mit einem ersten Lochdurchmesser auf und die zweite Lochung weist Löcher mit einem zweiten Lochdurchmesser auf, wobei der zweite Lochdurchmesser kleiner als der erste Lochdurchmesser ist.

Insbesondere kann die erste Lochung Löcher mit einem ersten Lochdurchmesser von mindestens annähernd der Stegbreite oder mindestens annähernd der Teilung der zweiten Lochung aufweisen. Die Stegbreite ist die Länge des ungelochten Zwischenraums zwischen zwei benachbarten Löchern.

In einer Ausführungsform des Durchfluss-Messgerätes ist die Differenz zwischen dem inneren Durchmesser des Trägerrohrs und dem äußeren Durchmesser des in das Trägerrohr eingebrachten im Wesentlichen zylindrischen Hohlkörpers größer oder gleich dem Streckgrenzbereich des Materials, aus welchem der im Wesentlichen zylindrische Hohlkörper besteht. Innerhalb des Streckgrenzbereichs eines Materials bleiben plastische Verformungen nicht bestehen. Um eine stabile Pressverbindung zwischen dem im Wesentlichen zylindrischen Hohlkörper und dem Trägerrohr herzustellen, ist die Differenz zwischen dem äußeren Durchmesser des im Wesentlichen zylindrischen Hohlkörper und dem inneren Durchmesser des Trägerrohrs daher größer oder gleich dem Streckgrenzbereich des Materials zu wählen, aus welchem der im Wesentlichen zylindrische Hohlkörper besteht.

Die Erfindung wird anhand der nachfolgenden Zeichnungen näher erläutert. Es zeigt:
Fig. 1a: eine Seitenansicht eines ersten Lochblechrohrs,
Fig. 1b: einen Querschnitt durch das erste Lochblechrohr,
Fig. 2a: eine Seitenansicht eines zweiten Lochblechrohrs,
Fig. 2b: einen Querschnitt durch das zweite Lochblechrohr,
Fig. 3a: .eine perspektivische Ansicht eines Stützkörpers, der aus dem ersten und dem zweiten Lochblechrohr gebildet ist,
Fig. 3b: einen Querschnitt durch den Stützkörper, und
Fig. 4: eine Draufsicht auf ein Loch der ersten Lochung in dem Bereich in dem sich die erste und zweite Lochung des Stützkörpers überlappen.

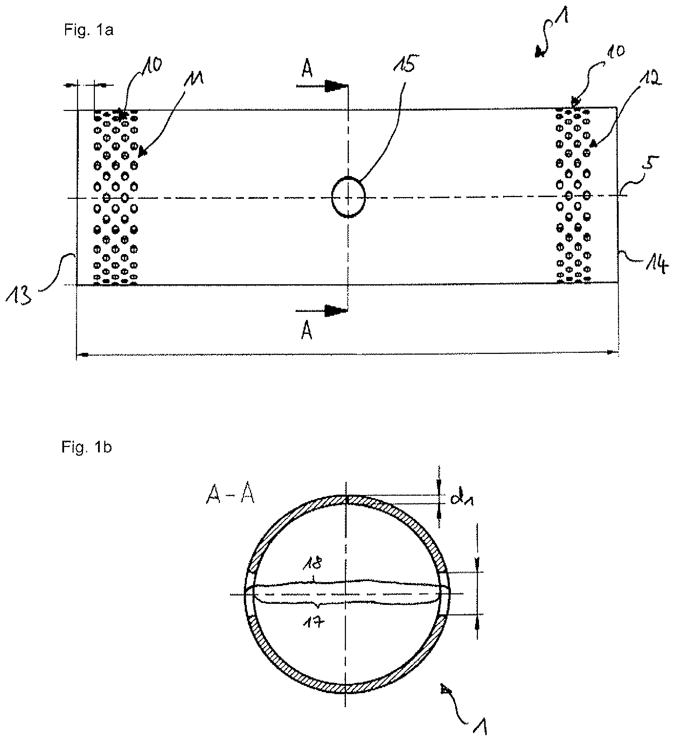

Figur 1 zeigt eine Seitenansicht eines ersten Lochblechrohrs 1. Das Lochblechrohr kann als Stützkörper für die Auskleidung eines Messrohrs eines magnetisch-induktiven Durchfluss-Messgeräts verwendet werden oder ist Teil eines solchen Stützkörpers aus mehreren Lochblechrohren 3. Alternativ kann das erste Lochblechrohr 1 auch als Stützkörper für die Auskleidung eines Ultraschall-Durchfluss-Messgerätes dienen. Das erste Lochblechrohr 1 weist eine zylindrische Gestalt auf. Weiterhin weist das erste Lochblechrohr 1 auf seinem Mantel in zwei ringförmigen Abschnitten 11, 12 eine erste Lochung auf. Ein erster ringförmiger Abschnitt 11 befindet sich im Bereich des Bodens 13 und ein zweiter ringförmiger Abschnitt 12 befindet sich im Bereich des Deckels 14 des zylindrischen ersten Lochblechrohrs 1. Das erste Lochblechrohr 1 weist eine erste Lochung 10 mit runden Löchern und einem Versatz zwischen den Laufreihen der Löcher auf. Die Löcher weisen einen Lochdurchmesser I1 auf.

An Bereich des Deckels 14 und des Bodens 13 sowie zwischen dem ersten und dem zweiten ringförmigen Abschnitt 11, 12 ist das Lochblechrohr 1 frei von der ersten Lochung 10, d.h. ungelocht. Das Lochblechrohr 1 weist mittig eine Aussparung 15 auf, die zur Aufnahme einer Mess- oder Bezugselektrode dient.

Das erste Lochblechrohr 1 kann auch entlang der ganzen Längsachse 5 radial mit der ersten Lochung, nicht gezeigt, versehen sein.

Figur 1b zeigt einen Querschnitt auf Höhe der Aussparung 15 für die Mess- oder Bezugselektrode. Das erste Lochblechrohr 1 weist eine erste Dicke d1 auf. Weiterhin weist das erste Lochblechrohr 1 einen äußeren und einen inneren Durchmesser 27, 28 auf.

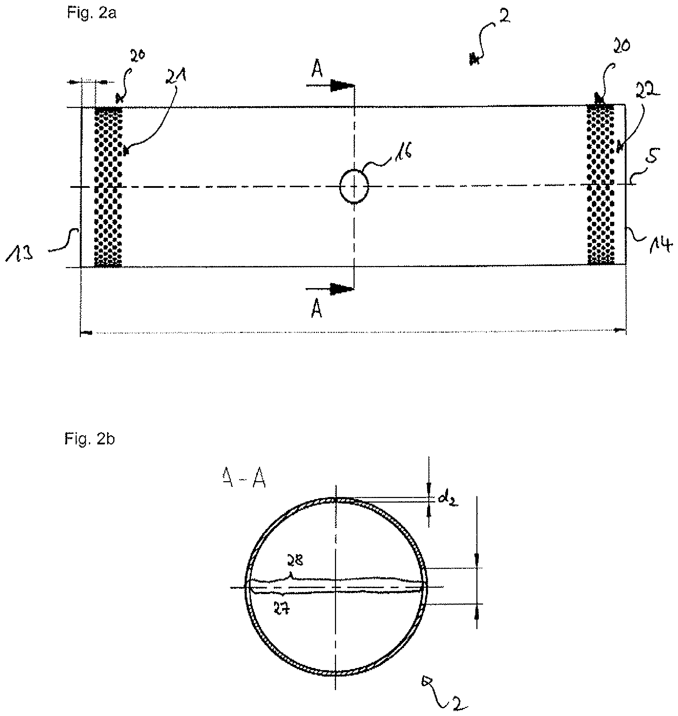

Figur 2a zeigt ein zweites Lochblechrohr 2 in einer Seitenansicht. Ebenso wie das erste Lochblechrohr 1 kann das zweite Lochblechrohr 2 erfindungsgemäß als Stützkörper oder Teil eines Stützkörpers aus mehreren Lochblechrohren 3 verwendet werden.

Das zweite Lochblechrohr 2 weist in zwei ringförmigen Abschnitten 21, 22 eine zweite Lochung 20 mit runden Löchern auf. Die Löcher weisen einen Lochdurchmesser I2 auf. Die Breite dieser ringförmigen Abschnitte 21, 22 ist dabei geringer als die Breite der die erste Lochung 10 aufweisenden ringförmigen Abschnitte 11, 12 des ersten Lochblechrohrs 1. Die Laufreihen der zweiten Lochung 20 sind ebenfalls zueinander versetzt. Das zweite Lochblechrohr 2 weist einen kleineren inneren Durchmesser 27 auf als das erste Lochblechrohr 1, so dass es in das erste Lochblechrohr 1 eingebracht werden kann.

Weiterhin weist das zweite Lochblechrohr 2 eine gegenüber dem ersten Lochblechrohr 1 geringere zweite Dicke d2 auf. Ebenso wie das erste Lochblechrohr 1 weist das zweite Lochblechrohr 2 einen inneren und einen äußeren Durchmesser 27, 28 auf. Zudem sind auch an dem zweiten Lochblechrohr 2 eine Aussparung 16 für eine Mess- oder Bezugselektrode vorgesehen.

Das zweite Lochblechrohr 2 kann auch entlang der ganzen Längsachse 5 radial mit der zweiten Lochung 20, nicht gezeigt, versehen sein.

Figur 2b zeigt einen Querschnitt auf Höhe der Aussparung 16, die zur Aufnahme der Mess- oder Bezugselektrode dient.

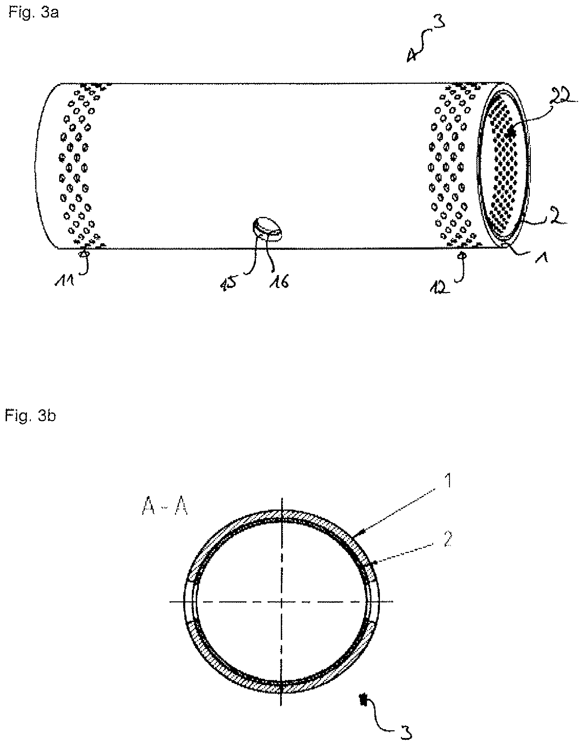

Figur 3a zeigt eine perspektivische Ansicht eines vormontierten, aus einem ersten und einem zweiten Lochblechrohr 1, 2 bestehenden, als Stützkörper 3 dienenden im Wesentlichen zylindrischen Hohlkörpers.

Die beiden Lochblechrohre 1, 2 sind zu diesem Zweck ineinander geschoben und miteinander fixiert. Der so vormontierte Stützkörper 3 wird dann in das Trägerrohr, nicht gezeigt, eingeführt und durch mechanisches Umformen an das Trägerrohr angefügt. Durch das mechanische Umformen wird eine Pressverbindung zwischen Trägerrohr und Stützkörper 3 hergestellt.

Die beiden Lochblechrohre 1, 2 werden in das Trägerrohr eingeführt und über den dort vorgesehenen Elektrodenlöchern positioniert. Die Lochblechrohr-Enden 13, 14 werden wenigstens in dem Bereich in dem das zweite Lochblechrohr 2 die zweite Lochung 20 aufweist teilweise gewalzt und an das Trägerrohr angefügt. Durch die unterschiedliche Lochung 10, 20 kann das elektrisch und/oder chemisch isolierende Material zwischen die Lochbleche 1, 2 gelangen.

In einer Variante wird ein erstes Lochblechrohr 1 mit einem annähernd 1 mm kleineren äußeren Durchmesser 18 als der innere Durchmesser des Trägerrohrs in das Trägerrohr geschoben. Anschliessend wird das Lochblechrohr 1 gewalzt und an den inneren Durchmesser des Trägerrohrs angefügt. Die erzeugte Pressverbindung kann dem Einspritzdruck der bei dem Auskleiden des Trägerrohr bzw. einbetten des Stützkörper 3 vorliegt standhalten. Im mittleren Teil des Messrohres entsteht ein Spalt zwischen dem Lochblechrohr 1 und der Trägerrohrwand, der als Verankerung für das elektrisch und/oder chemisch isolierende Material dient.

Durch die Aussparung 15, 16 für die Mess- oder Bezugselektrode kann das elektrisch und/oder chemisch isolierende Material in den Spalt zwischen dem als Stützkörper 3 dienenden im Wesentlichen zylindrischen Hohlkörper gelangen.

Alternativ werden anstelle des ersten Lochblechrohres 1 zwei Ringe verwendet, die an den Enden des Trägerrohres mit eingewalzt werden. Dabei entsteht zwischen dem zweiten Lochblechrohr 2 und der Wandung des Trägerrohrs ein Spalt, der als Verankerung für elektrisch und/oder chemisch isolierende Material dient.

Das elektrisch und/oder chemisch isolierende Material besteht bspw. aus einem Polytetrafluoroethylen PTFE, einem Perfluoralkoxy PFA oder einem Polyamid PA.

Durch das Einbetten des Hohlkörpers bzw. des Stützkörpers 3 in dem elektrisch und/oder chemisch isolierenden Material entsteht das Lumen des Messrohrs zur Aufnahme des Messstoffs.

Figur 3b zeigt einen Querschnitt durch den als Stützkörper 3 dienenden im Wesentlichen zylindrischen Hohlkörper auf Höhe der Aussparung für die Mess- oder Bezugselektrode. Im Querschnitt ist das erste und das zweite Lochblechrohr 1, 2 des Stützkörpers 3 zu erkennen.

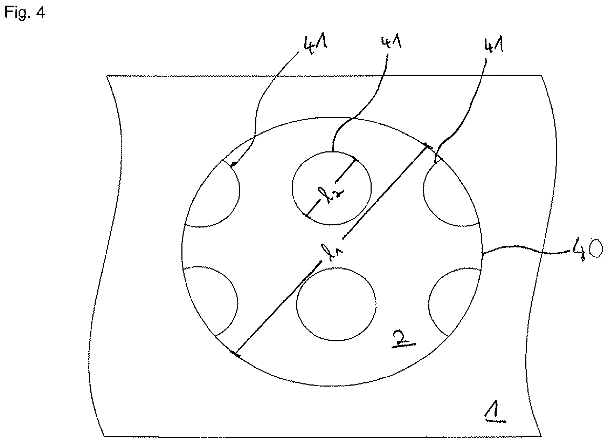

Figur 4 zeigt eine Draufsicht auf ein Loch 40 des ersten Lochblechrohrs 1. Das zweite Lochblechrohr 2 ist in das erste Lochblechrohr 1 eingeschoben und dort fixiert. Das gezeigte Loch 40 befindet sich in dem Bereich, in dem sich die erste und zweite Lochung 10, 20 überlappen. Durch das Loch 40 hindurch ist die zweite Lochung 20 des zweiten Lochblechrohrs 2 sichtbar.

Wird das elektrisch und/oder chemisch isolierende Material in den Stützkörper 3 eingeschmolzen, fließt das elektrisch und/oder chemisch isolierende Material durch die Löcher 41 der zweiten Lochung 20 hindurch in das Loch 40 der ersten Lochung 10 hinein und dort wieder zusammen. Dadurch kann das elektrisch und/oder chemisch isolierende Material aus dem die Auskleidung besteht an dem Stützkörper 3 befestigt werden, indem es sich dort verankert.

In dem gezeigten Loch 40 der ersten Lochung 10 verbindet sich das elektrisch und/oder chemisch isolierende Material wieder und sorgt so für eine besonders feste Verankerung der Auskleidung. Das elektrisch und/oder chemisch isolierende Material, das bspw. aus einem Kunststoff besteht, neigt beim Erkalten zum Schrumpfen, d.h. einer Volumenverkleinerung. Durch das Hinterfließen des elektrisch und/oder chemisch isolierenden Materials in das Loch 40 der ersten Lochung 10 und die Löcher 41 zweiten Lochung 20 wird so eine besonders beständige Verbindung erreicht.

### Bezugszeichenliste

- 1: Erstes Lochblechrohr
- 2: Zweites Lochblechrohr
- 3: Stützkörper aus zwei Lochblechrohren
- 5: Längsachse des Messrohrs
- 10: Erste Lochung
- 11: Erste Abschnitt des ersten Lochblechrohrs mit der ersten Lochung
- 12: Zweiter Abschnitt des ersten Lochblechrohrs mit der zweiten Lochung
- 13: Boden
- 14: Decke!
- 15: Aussparung für Mess- oder Bezugselektrode im ersten Lochblechrohr
- 16: Aussparung für Mess- oder Bezugselektrode im zweiten Lochblechrohr
- 17: Innerer Durchmesser des ersten Lochblechrohrs
- 18: Äußerer Durchmesser des ersten Lochblechrohrs
- 20: Zweite Lochung
- 21: Erster Abschnitt des zweiten Lochblechrohrs mit der zweiten Lochung
- 22: Zweiter Abschnitt des zweiten Lochblechrohrs mit der zweiten Lochung
- 27: Innerer Durchmesser des zweiten Lochblechrohrs
- 28: Äußerer Durchmesser des zweiten Lochblechrohrs
- 40: Loch der ersten Lochung
- 41: Löcher der zweiten Lochung
- A-A: Querschnittsebene
- d1: Dicke des ersten Lochblechrohrs
- d2: Dicke des zweiten Lochblechrohrs
- I1: Lochdurchmesser der ersten Lochung
- I2: Lochdurchmesser der zweiten Lochung

## Patentansprüche

1. Verfahren zur Herstellung eines Messrohrs eines Durchfluss-Messgerätes, wobei das Messrohr ein Lumen zur Aufnahme eines strömenden Messstoffs aufweist,
**welches Verfahren die folgenden Schritte umfasst:**
Einbringen mindestens eines im Wesentlichen zylindrischen Hohlkörpers (1, 2, 3) in ein Trägerrohr,
Fügen des im Wesentlichen zylindrischen Hohlkörpers (1, 2, 3) an das Trägerrohr durch mechanisches Umformen wenigstens eines Teilbereichs des im Wesentlichen zylindrischen Hohlkörpers (1, 2, 3),
Einbetten des an das Trägerrohr angefügten Hohlkörpers (1, 2, 3) in ein elektrisch und/oder chemisch isolierendes Material, wobei durch das elektrisch und/oder chemisch isolierende Material das Lumen des Messrohrs gebildet wird.

2. Verfahren nach Anspruch 1,
**wobei** der im Wesentlichen zylindrische Hohlkörper durch ein Walzverfahren umgeformt wird.

3. Verfahren nach Anspruch 1 oder 2,
**wobei** das Trägerrohr eine Innenfläche aufweist,
**wobei** der im Wesentlichen zylindrische Hohlkörper (1, 2, 3) durch mechanisches Umformen wenigstens eines Teilbereichs des im Wesentlichen zylindrischen Hohlkörpers (1, 2, 3) an die Innenfläche des Trägerrohrs angefügt wird.

4. Verfahren nach Anspruch 1, 2 oder 3,
**wobei** mindestens ein Lochblechrohr (1, 2) als im Wesentlichen zylindrischer Hohlkörper (1, 2, 3) verwendet wird.

5. Verfahren nach einem der vorherigen Ansprüche,
**wobei** die Differenz zwischen dem inneren Durchmesser des Trägerrohrs und dem äußeren Durchmesser (18, 28) des im Wesentlichen zylindrischen Hohlkörpers (1, 2, 3) weniger als 1 mm beträgt.

6. Durchfluss-Messgerät mit einem ein Trägerrohr umfassenden Messrohr, wobei das Messrohr mit einem elektrisch und/oder chemisch isolierenden Material ausgekleidet ist,
**dadurch gekennzeichnet,**
**dass** mindestens ein im Wesentlichen zylindrischer Hohlkörper (1, 2, 3) durch mechanisches Umformen an das Trägerrohr gefügt ist,
**dass** der im Wesentlichen zylindrische Hohlkörper (1, 2, 3) in das elektrisch und/oder chemisch isolierende Material eingebettet ist.

7. Durchfluss-Messgerät nach Anspruch 6,
**wobei** der im Wesentlichen zylindrische Hohlkörper (1, 2, 3) aus einem zu einem Rohr geformten Blech besteht.

8. Durchfluss-Messgerät nach Anspruch 6 oder 7,
**wobei** der im Wesentlichen zylindrische Hohlkörper (1, 2, 3) mindestens eine Lochung (10, 20) aufweist.

9. Durchfluss-Messgerät nach Anspruch 8,
**wobei** der an das Trägerrohr angefügte im Wesentlichen zylindrische Hohlkörper (1, 2, 3) wenigstens in einem Endbereich (13, 14), welcher zum Anschließen des Messrohrs an eine Rohrleitung dient, frei von der Lochung (19, 20) ist

10. Durchfluss-Messgerät nach Anspruch 6, 7, 8 oder 9,
**wobei** der im Wesentlichen zylindrische Hohlkörper (1, 2, 3) entlang wenigstens eines radial verlaufenden Bereichs an das Trägerrohr gefügt ist.

11. Durchfluss-Messgerät nach einem der vorherigen Ansprüche,
**wobei** der im Wesentlichen zylindrische Hohlkörper (1, 2, 3) aus einem ersten Lochblechrohr (1) mit einer ersten Lochung (10) und aus einem zweiten Lochblechrohr (2) mit einer zweiten Lochung (20) besteht,
wobei das erste Lochblechrohr (1) das zweite Lochblechrohr (2) umfasst.

12. Durchfluss-Messgerät nach Anspruch 11,
**wobei** die erste Lochung (10) Löcher mit einem ersten Lochdurchmesser (I1) aufweist und die zweite Lochung (20) Löcher mit einem zweiten Lochdurchmesser (I2) aufweist, wobei der zweite Lochdurchmesser (I2) kleiner als der erste Lochdurchmesser (I1) ist.

13. Durchfluss-Messgerät nach einem der vorherigen Ansprüche,
**wobei** die Differenz zwischen dem inneren Durchmesser des Trägerrohrs und dem äußeren Durchmesser des in das Trägerrohr eingebrachten im Wesentlichen zylindrischen Hohlkörpers (1, 2, 3) größer oder gleich dem Streckgrenzbereich des Materials ist, aus welchem der im Wesentlichen zylindrische Hohlkörper (1, 2, 3) besteht.

## Claims

1. Procedure for fabricating a measuring tube of a flowmeter, wherein the measuring tube has a channel for the reception of a flowing fluid,
**said procedure comprising the following steps:**
Introduction of at least one essentially cylindrical hollow body (1, 2, 3) into the carrier tube,
Joining of the essentially cylindrical hollow body (1, 2, 3) to the carrier tube by the mechanical forming of at least a subsection of the essentially cylindrical hollow body (1, 2, 3),
Embedding of the hollow body (1, 2, 3) joined to the carrier tube into an electrically and/or chemically isolating material, wherein the channel of the measuring tube is formed by the electrically and/or chemically isolating material.

2. Procedure as claimed in Claim 1,
**wherein** the essentially hollow body is formed by a rolling process.

3. Procedure as claimed in Claim 1 or 2,
**wherein** the carrier tube has an interior surface,
**wherein** the essentially cylindrical hollow body (1, 2, 3) is joined to the interior surface of the carrier tube by the mechanical forming of at least a subsection of the essentially cylindrical hollow body (1, 2, 3).

4. Procedure as claimed in Claim 1, 2 or 3,
**wherein** at least one perforated plate tube (1, 2) is used as the essentially cylindrical hollow body (1, 2, 3).

5. Procedure as claimed in one of the previous claims,
**wherein** the difference between the inner diameter of the carrier tube and the outer diameter (18, 28) of the essentially cylindrical hollow body (1, 2, 3) is less than 1 mm.

6. Flowmeter with a measuring tube comprising a carrier tube,
wherein the measuring tube is lined with an electrically and/or chemically isolating material,
**characterized in that**
at least one essentially cylindrical hollow body (1, 2, 3) is joined to the carrier tube by mechanical forming,
the essentially cylindrical hollow body (1, 2, 3) is embedded into the electrically and/or chemically isolating material.

7. Flowmeter as claimed in Claim 6,
**wherein** the essentially cylindrical hollow body (1, 2, 3) is fabricated from sheet metal formed to create a tube.

8. Flowmeter as claimed in Claim 6 or 7,
**wherein** the essentially cylindrical hollow body (1, 2, 3) has at least one perforation area (10, 20).

9. Flowmeter as claimed in Claim 8,
**wherein** the essentially cylindrical hollow body (1, 2, 3) joined to the carrier tube is free from the perforation (19, 20) at least in an end area (13, 14), which serves to connect the measuring tube to a pipe.

10. Flowmeter as claimed in Claim 6, 7, 8 or 9,
**wherein** the essentially cylindrical hollow body (1, 2, 3) is joined to the carrier tube along at least an area that extends radially.

11. Flowmeter as claimed in one of the previous claims,
**wherein** the essentially cylindrical hollow body (1, 2, 3) is made from a first perforated plate tube (1) with a first perforation area (10) and a second perforated plate tube (2) with a second perforation area (20), wherein the first perforated plate tube (1) surrounds the second perforated plate tube (2).

12. Flowmeter as claimed in Claim 11,
**wherein** the first perforation area (10) has a first perforation diameter (I1) and the second perforation area (20) has a second perforation diameter (I2), wherein the second perforation diameter (I2) is smaller than the first perforation diameter (I1).

13. Flowmeter as claimed in one of the previous claims,
**wherein** the difference between the inner diameter of the carrier tube and the outer diameter of the essentially cylindrical hollow body (1, 2, 3) introduced into the carrier tube is greater than or equal to the yield point of the material from which the essentially cylindrical hollow body (1, 2, 3) is made.

## Revendications

1. Procédé destiné à la fabrication d'un tube de mesure d'un débitmètre, le tube de mesure comportant un canal intérieur pour la réception d'un produit en écoulement,
**lequel procédé comprend les étapes suivantes** :
Introduction d'un corps creux pour l'essentiel cylindrique (1, 2, 3) dans un tube support,
Jonction du corps creux pour l'essentiel cylindrique (1, 2, 3) au tube support par formage mécanique d'au moins une zone partielle du corps creux pour l'essentiel cylindrique (1, 2, 3),
Intégration du corps creux (1, 2, 3), joint au tube support, dans un matériau électriquement et/ou chimiquement isolant, le canal intérieur du tube de mesure étant formé par le matériau électriquement et/ou chimiquement isolant.

2. Procédé selon la revendication 1,
**pour lequel** le corps creux pour l'essentiel cylindrique est formé par un procédé de laminage.

3. Procédé selon la revendication 1 ou 2,
**pour lequel** le tube support présente une surface intérieure,
**pour lequel** le corps creux pour l'essentiel cylindrique (1, 2, 3) est joint à la surface intérieure du tube support par formage mécanique d'au moins une zone partielle du corps creux pour l'essentiel cylindrique (1, 2, 3).

4. Procédé selon la revendication 1, 2 ou 3,
**pour lequel** est utilisé un tube en tôle perforée (1, 2) en tant que corps creux pour l'essentiel cylindrique (1, 2, 3).

5. Procédé selon l'une des revendications précédentes,
**pour lequel** la différence entre le diamètre intérieur du tube support et le diamètre extérieur (18, 28) du corps creux pour l'essentiel cylindrique (1, 2, 3) est inférieure à 1 mm.

6. Débitmètre avec un tube support comprenant un tube de mesure,
le tube de mesure étant revêtu d'un matériau électriquement et/ou chimiquement isolant,
**caractérisé**
**en ce qu'**au moins un corps creux pour l'essentiel cylindrique (1, 2, 3) est joint par formage mécanique au tube support,
**en ce que** le corps creux pour l'essentiel cylindrique (1, 2, 3) est intégré dans le matériau électriquement et/ou chimiquement isolant.

7. Débitmètre selon la revendication 6,
**pour lequel** le corps creux pour l'essentiel cylindrique (1, 2, 3) est fabriqué à partir d'une tôle formée en un tube.

8. Débitmètre selon la revendication 6 ou 7,
**pour lequel** le corps creux pour l'essentiel cylindrique (1, 2, 3) présente au moins des perforations (10, 20).

9. Débitmètre selon la revendication 8,
**pour lequel** le corps creux pour l'essentiel cylindrique (1, 2, 3) joint au tube support est exempt de perforations (19, 20) au moins dans une zone d'extrémité (13, 14), laquelle sert au raccordement du tube de mesure à une conduite.

10. Débitmètre selon la revendication 6, 7, 8 ou 9,
**pour lequel** le corps creux pour l'essentiel cylindrique (1, 2, 3) est joint au tube support le long d'au moins une zone qui s'étend radialement.

11. Débitmètre selon l'une des revendications précédentes,
**pour lequel** le corps creux pour l'essentiel cylindrique (1, 2, 3) est constitué d'un premier tube en tôle perforée (1) avec une première zone perforée (10) et d'un deuxième tube en tôle perforée (2) avec une deuxième zone perforée (20), le premier tube en tôle perforée (1) incluant le deuxième tube en tôle perforée (2).

12. Débitmètre selon la revendication 11,
**pour lequel** la première zone perforée (10) présente des trous d'un premier diamètre de trou (I1) et la deuxième zone perforée (10) présente des trous d'un deuxième diamètre de trou (I2), le deuxième diamètre de trou (I2) étant inférieur au premier diamètre de trou (I1).

13. Débitmètre selon l'une des revendications précédentes,
**pour lequel** la différence entre le diamètre intérieur du tube support et le diamètre extérieur du corps creux pour l'essentiel cylindrique (1, 2, 3) introduit dans le tube support est supérieure ou égale à la limite d'élasticité du matériau, à partir duquel le corps creux pour l'essentiel cylindrique (1, 2, 3) est constitué.
